# EUROPEAN PATENT APPLICATION

(11) **EP 1 190 942 A2**
(43) Date of publication of application: **27.03.2002**
(21) Application number: 01307162.6
(22) Date of filing: 23.08.2001
(51) Int. Cl.: B62D 65/00

(54) **Vehicle sunroof mounting assembly and method**

(30) Priority: 22.09.2000 US 668759
(71) Applicant: Meritor Light Vehicle Technology, LLC, Troy, Michigan 48084 (US)
(72) Inventor: Allen, Troy, Howell, Michigan 48843 (US)
(74) Representative: Jones, John Bryn

(57) **Abstract**

An assembly for mounting a sunroof frame (20) within a vehicle roof opening (14) includes a pair of guiderails (24) for slidably supporting a sunroof within the opening along longitudinal sides and a pair of frame members for supporting forward and rearward portions of the sunroof within the opening. Each guiderail (24) has a flanged mounting portion located at either end and each frame member has a trough mounting portion located at either end. The flanged mounting portions are positioned adjacent to the to the trough mounting portions in an overlapping relationship at each corner of the opening. A double-sided adhesive strip (54) is mounted between the trough (62) and flanged (66) mounting portions to secure and seal the guiderails to the frame members.

## Description

### BACKGROUND OF THE INVENTION

The present invention relates to a vehicle sunroof mounting assembly and a method of assembling a sunroof frame. More particularly, the present invention relates to a unique method and apparatus for securing and sealing sunroof frame members to each other with a double-sided adhesive strip.

Sunroof frames are mounted within a vehicle roof opening to support a slidable and/or pivotable sunroof. The frames are typically fixed to the vehicle roof and must be securely held in place and sealed to prevent water from leaking into the passenger compartment.

Typically, four frame members are secured together to form a rectangular frame that is mounted within the roof opening. The ends of the frame members are overlapped with one another at each of the comers to define mounting interfaces. A butyl sealant is injected in the mounting interfaces, between adjoining frame members and the frame members are then riveted together. The rivets secure the frame members together and the butyl provides the seal to prevent water leakage into the passenger compartment.

One disadvantage with this mounting method is that the rivets do not always securely engage the frame members resulting in a loose fit between frame members. A loose fit can cause leaking or rattling, which can lead to increased component wear. Another disadvantage is that the riveting process can cause cracking in the frame members requiring immediate replacement of frame members, which increases assembly time and cost. The use of butyl can also be disadvantageous. Special equipment is required to inject the butyl between the frame members which significantly increases cost. Further, the process is messy and time consuming.

Thus, it is desirable to have a method and apparatus for securing and sealing sunroof frame members to each other that eliminates the need for fasteners and which provides a sealed environment. The method and apparatus should also be inexpensive and decrease assembly time.

### SUMMARY OF THE INVENTION

In a disclosed embodiment of this invention, a vehicle sunroof mounting assembly includes a unique method and apparatus for securing and sealing sunroof frame members to each other with a double-sided adhesive strip. The vehicle sunroof mounting assembly includes a first frame member mounted to a vehicle structure along a first portion of a vehicle roof opening and a second frame member mounted to the vehicle structure along a second portion of the vehicle roof opening. The first frame member defines a first mount profile and the second frame member defines a second mount profile that is positioned in an overlapping relationship to the first mount profile. An adhesive member includes an upper surface that adheres to the first mount profile and a lower surface that adheres to the second mount profile to secure and seal the first frame member to the second frame member.

In a preferred embodiment, the first and second mount profiles are curvilinear and the adhesive member is contoured to each of the profiles. The profiles are preferably U-shaped with the adhesive member being sandwiched between the profiles.

The method of assembling a sunroof frame for mounting within a vehicle roof opening includes the following steps. The first frame member is provided for mounting along one side of the roof opening and the second frame member is provided for mounting along an adjoining side of the roof opening. One side of an adhesive strip is adhered to the first frame member and an opposite side of the adhesive strip is adhered to the second frame member to secure and seal the second frame member to the first frame member.

The use of a double-sided adhesive strip to secure adjoining sunroof frame members to each other eliminates the need for fasteners and secondary sealants. This facilitates assembly and reduces cost.

These and other features of the present invention can be best understood from the following specification and drawings, the following of which is a brief description.

### BRIEF DESCRIPTION OF THE DRAWINGS

Figure 1 is a schematic view of a vehicle having a sunroof.
Figure 2 is an exploded view of a sunroof and frame assembly incorporating the subject invention.
Figure 3 is a magnified, cross-sectional, assembled view, partially cut-away, of the subject invention.

### DETAILED DESCRIPTION OF A PREFERRED EMBODIMENT

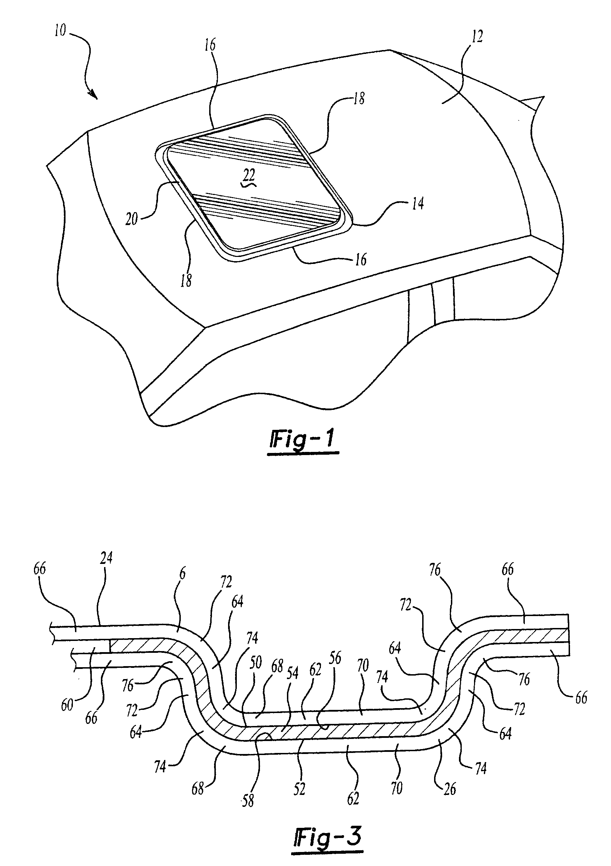

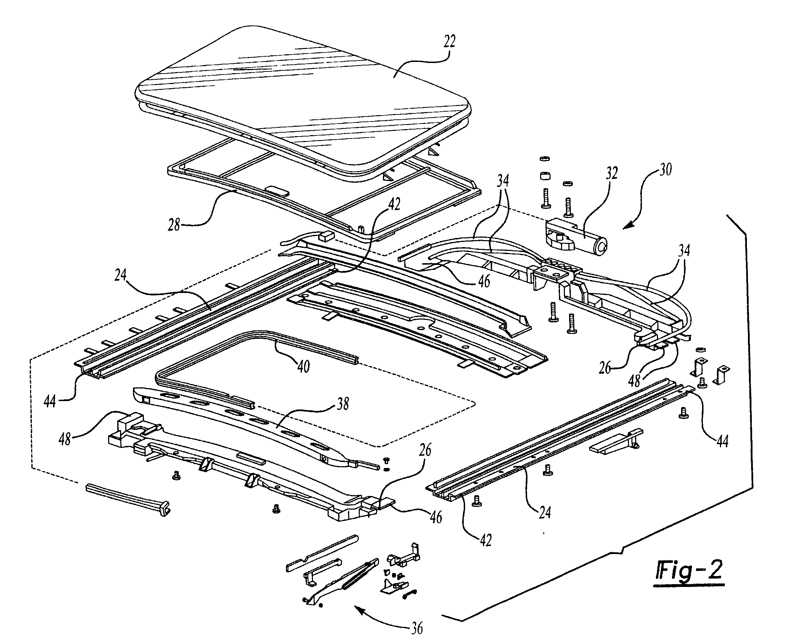

A vehicle is generally shown at 10 in Figure 1. The vehicle 10 has a roof 12 that includes a sunroof opening 14 that is generally rectangular in shape with a pair of longitudinal sides 16 and a pair of lateral sides 18. A sunroof frame 20, comprised of a plurality of frame members, is mounted within the opening 14 to support a sunroof 22. The subject invention relates to a method and apparatus for mounting and sealing frame members to each other. The subject invention can be utilized with a sliding sunroof, a pivoting sunroof, or a sliding and pivoting sunroof. Further, the subject invention can be utilized with a manually operated sunroof or a power sunroof.

The sunroof and frame assembly are shown in greater detail in Figure 2. A pair of guiderails 24 are mounted to a vehicle structure, such as the roof 12, along the longitudinal sides 16 of the opening 14. Front and rear trough members 26 are mounted along the lateral sides 18 of the opening 14. The guiderails 24 and trough members 26 are interconnected together to form the basic rectangular sunroof frame 20. The sunroof 22 is supported on a sliding frame 28 that is guided for fore and aft movement along the guiderails 24. A drive assembly 30 including an electric motor 32 and drive cables 34 is used to move the sunroof 22 along the guiderails 24. The drive assembly 30 can also be used to drive a pivoting mechanism 36 that pivots one end of the sunroof 22 between a raised position and a lowered position.

An airflow component 38 is mounted along the forward lateral side 18 of the opening 14 to facilitate airflow over the sunroof assembly. A single piece rectangular seal 40 is mounted within the opening to prevent water leakage into the passenger compartment. The operation of the sunroof assembly is well known and will not be discussed in any further detail.

Each of the guiderails 24 includes a first end 42 and a second end 44. Each of the trough members 26 includes a first end 46 and a second end 48. The first ends 42, 46 of the guiderails 24 and trough members 26 are positioned in an overlapping relationship and the second ends 44, 48 of the guiderails 24 and trough members 26 are positioned in an overlapping relationship adjacent to the four (4) corners of the opening 14.

This overlapping relationship is shown in greater detail in Figure 3, which shows a magnified view of one of the four (4) corners. It should be understood that the other three (3) comers are similar to the one shown in Figure 3. The guiderail 24 has a first mounting portion 50 that defines a first mount profile and the trough member 26 has a second mounting portion 52 that defines a second mount profile. The first and second mount profiles are preferably curvilinear.

The second mount profile is positioned in an overlapping relationship to the first mount profile and an adhesive member 54 is used to secure and seal the guiderail 24 to the trough member 26. The adhesive member 54 is preferably a flexible double-sided adhesive tape strip that is manufactured by the Minnesota Mining and Manufacturing Company (3M®). The adhesive member 54 has an upper surface 56 for adhering to the first mount profile and a lower surface 58 for adhering to the second mount profile.

The second mount profile is positioned in an overlapping relationship to the first mount profile to define a gap 60 between the profiles. The adhesive member 54 is installed within the gap 60 and contoured along the first and second mount profiles to secure and seal the guiderail 24 to the trough member 26.

The first mount profile is defined by a first cross-sectional shape and the second mount profile is defined by a second cross-sectional shape that is similar in shape to the first mount profile. Preferably the shapes are generally U-shaped with a central base portion 62, a pair of arms 64, and a pair of flanges 66. The central base portion 62 has a first end 68 and a second end 70. The arms 64 extend outwardly from opposing ends 68, 70 of the base portion 62 to distal ends 72. The flanges 66 extend out in opposite directions from each other in a transverse relationship to the distal ends 72. A first transitional interface 74 is formed between the central base portion 62 and each of the arms 64, and a second transitional interface 76 is formed between the arms 64 and the flanges 66. The first and second interfaces 74, 76 are defined by a predetermined radius of curvature. The radius of curvature can vary depending on the size, shape, and mounting application of the guiderails 24 and trough members 26.

The method of assembling the sunroof frame 20 for mounting within the vehicle roof opening 14 includes the following steps. Adjacent frame members 24, 26 are provided. One side of the adhesive member 54 is adhered to one frame member 24 and an opposite side of the adhesive member 54 is adhered to the other frame member 26 to secure and seal the frame members 24, 26 together. Additional steps include providing the frame members 24, 26 with mounting portions having curvilinear profiles, overlapping the mounting portion of the one frame member 24 with the mounting portion of the second frame member 26, and securing and sealing the frame members 24, 26 together with the adhesive strip. Thus, the adhesive member 54 is sandwiched between the mount profiles of the frame members 24, 26. This method is performed at each corner of the frame 20.

The use of a double-sided adhesive strip to secure adjoining sunroof frame members to each other eliminates the need for fasteners and secondary sealants. This facilitates assembly and reduces cost.

Although a preferred embodiment of this invention has been disclosed, it should be understood that a worker of ordinary skill in the art would recognize many modifications come within the scope of this invention. For that reason, the following claims should be studied to determine the true scope and content of this invention.

## Claims

1. A vehicle (10) sunroof (22) mounting assembly comprising:
a first frame member mounted to a vehicle structure along a first portion of a vehicle roof opening (14) and defining a first mount profile;
a second frame member mounted to the vehicle structure along a second portion of the vehicle roof opening and defining a second mount profile positioned in an overlapping relationship to said first mount profile; and
an adhesive member (54) presenting an upper surface (56) for adhering to said first mount profile and a lower surface (58) for adhering to said second mount profile to secure and seal said first frame member to said second frame member.

2. An assembly according to claim 1 wherein said second mount profile is positioned in an overlapping relationship to said first mount profile to define a gap between said profiles and wherein said adhesive member is located within said gap and contoured to said profiles to secure and seal said first frame member to said second frame member.

3. An assembly according to claim 1 or claim 2 wherein said first mount profile is defined by a first cross-sectional shape and said second mount profile is defined by a second cross-sectional shape that corresponds to said first cross-sectional shape.

4. An assembly according to claim 3 wherein said first and second cross-sectional shapes are generally U-shaped with a central base portion (62), a pair of arms (64) extending outwardly from opposing ends of said base portion to distal ends, and a pair of flanges (66) extending in opposing directions from each other in a transverse relationship to said distal ends.

5. An assembly according to claim 4 including a first interface (74) between said central base portion and each of said arms, and a second interface (76) between said arms and said flanges wherein said first and second interfaces are defined by a predetermined radius of curvature.

6. An assembly according to any preceding claim wherein said first and second mount profiles are curvilinear.

7. An assembly according to any preceding claim wherein the roof opening is rectangular with said first frame member extending longitudinally along one side of the opening and with said second frame member extending laterally along an adjoining side of the opening with said overlapping first and second mount profiles defining a corner of the opening.

8. An assembly according to any preceding claim wherein the roof opening is rectangular with a pair of longitudinal sides and a pair of lateral sides intersecting said longitudinal sides to define four corners and wherein said first frame member includes a first pair of frames mounted long said longitudinal sides and said second frame member includes a second pair of frames mounted along said lateral sides with said first and second mount profiles overlapping each other at each of said four corners.

9. An assembly for mounting a sunroof frame within a vehicle (10) roof opening (14) comprising;
a pair of guiderails (24) mounted on opposing longitudinal sides (16) of the roof opening, each guiderail including a first (42) and second (44) end for supporting a flange mounting portion;
a pair of frame members mounted on opposing lateral sides of the roof opening, each frame member including a first (46) and second end (48) for supporting a trough mounting portion that is positioned adjacent to said corresponding flange mounting portion; and
a double-sided adhesive strip (54) mounted between said trough and flange mounting portions to secure and seal said guiderails to said frame members.

10. An assembly according to claim 9 wherein said flange mounting portion is defined by a first mount profile and said trough mounting portion is defined by a second mount profile that corresponds in shape to said first mount profile.

11. An assembly according to claim 10 wherein said first and second mount profiles are curvilinear.

12. An assembly according to claim 11 wherein said adhesive strip is flexible and includes an upper surface (56) that adheres to and is contoured with said first mount profile and a lower surface (58) that adheres to and is contoured with said second mount profile.

13. A method of assembling a sunroof frame for mounting within a vehicle (10) roof opening (14) comprising the steps of:
(a) providing a first frame member for mounting along one side of the roof opening and a second frame member for mounting along an adjoining side of the roof opening;
(b) adhering one side of an adhesive strip (54) to the first frame member; and
(c) adhering an opposite side of the adhesive strip to the second frame member to secure and seal the second frame member to the first frame member.

14. A method according to claim 13 including the steps of:
providing the first and second frame members with mounting portions having curvilinear profiles;
overlapping the mounting portion of the first frame member with the mounting portion of the second frame member; and
securing and sealing the second frame member to the first frame member with the adhesive strip.

15. A method according to claim 13 including the steps of:
providing a third frame member along an opposite side of the roof opening from the first frame member and a fourth frame member along an opposite side of the roof opening from the second frame member to form a rectangle;
adhering one side of an adhesive strip to the second frame member and an opposite side of the adhesive strip to the third frame member to secure and seal the second frame member to the third frame member;
adhering one side of an adhesive strip to the third frame member and an opposite side of the adhesive strip to the fourth frame member to secure and seal the third frame member to the fourth frame member; and
adhering one side of an adhesive strip to the fourth frame member and an opposite side of the adhesive strip to the first frame member to secure and seal the fourth frame member to the first frame member.
